(19) Europäisches Patentamt
European Patent Office
Office européen des brevets

(11) **EP 3 235 299 B1**

(12) **FASCICULE DE BREVET EUROPEEN**

(45) Date de publication et mention de la délivrance du brevet:
**26.01.2022  Bulletin 2022/04**

(21) Numéro de dépôt: **15830804.9**

(22) Date de dépôt: **17.12.2015**

(51) Classification Internationale des Brevets (IPC):
**H04W 48/14** *(2009.01)*    *H04W 48/18* *(2009.01)*

(52) Classification Coopérative des Brevets (CPC):
**H04W 48/14;** H04W 48/18

(86) Numéro de dépôt international:
**PCT/FR2015/053580**

(87) Numéro de publication internationale:
**WO 2016/097625 (23.06.2016 Gazette 2016/25)**

(54) **ÉVALUER LA QUALITÉ DE COMMUNICATION DANS UN RÉSEAU SANS-FIL**

BEURTEILUNG DER QUALITÄT VON KOMMUNIKATION IN EINEM DRAHTLOSEN NETZWERK

EVALUATING THE QUALITY OF COMMUNICATION IN A WIRELESS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2014  FR 1462766**

(43) Date de publication de la demande:
**25.10.2017  Bulletin 2017/43**

(73) Titulaire: **ORANGE**
**92130 Issy-les-Moulineaux (FR)**

(72) Inventeurs:
• **EL AYOUBI, Salah Eddine**
**94270 Le Kremlin-Bicêtre (FR)**
• **BEN JEMAA, Sana**
**92130 Issy les Moulineaux (FR)**

(56) Documents cités:
**EP-A1- 2 670 186       EP-A2- 1 542 405
WO-A1-2006/066007   WO-A1-2014/013196
WO-A1-2014/112941   FR-A1- 2 977 117
FR-A1- 2 992 819       KR-A- 20100 092 656
US-A1- 2004 142 693   US-A1- 2012 071 200**

**Description**

L'invention se rapporte au domaine des télécommunications. Plus particulièrement, l'invention concerne la qualité de communication offerte à des terminaux mobiles attachés à des stations, dites « stations serveuses », émettrices et/ou réceptrices dans le domaine radiofréquences (par exemple réseaux cellulaires).

Les terminaux mobiles, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« Multi-Interface », ou MIF en anglais).

Plusieurs adresses IP peuvent alors être attribuées à ces terminaux MIF pour se connecter à différents types de réseaux tels qu'un réseau WLAN (initiales des mots anglais « *Wireless Local Area Network* » signifiant « Réseau Local Sans-Fil »), ou un réseau cellulaire.

On notera à cet égard que l'invention est compatible avec tous les types de réseaux WLAN, par exemple les réseaux WiFi selon la norme 802.11 de la IEEE (Institute of Electrical and Electronics Engineers). L'invention est également compatible avec tous les types de réseaux cellulaires, par exemple ceux utilisant la technologie GSM/GPRS, telle que définie dans la version 97 et les versions ultérieures de la norme GSM, ou la technologie UMTS (« *Universal Mobile Telecommunications System* »), telle que définie notamment dans les normes 23.002, 23.003 et 29.060 du 3GPP (« *Third-Generation Partnership Project* »), ou la technologie LTE (« *Long Term Evolution* »), ou encore la technologie « femto 3G » telle que définie dans le document TR 25.820 V8.2.0 (2008-09) du 3GPP.

Pour un terminal mobile ayant accès à au moins un réseau de radiocommunications comprenant un certain nombre de stations serveuses, la procédure d'allocation de ressources se déroule habituellement de la façon suivante :

> a) le terminal scrute les divers signaux pilotes qu'il peut recevoir, et mesure pour chaque signal pilote respectif l'affaiblissement de propagation (« *path loss* » en anglais) respectif,
> b) lorsque le terminal souhaite initier une communication, il émet une requête de rattachement à la station serveuse offrant le signal pilote reçu le plus puissant, en indiquant dans cette requête ledit affaiblissement de propagation ainsi que le débit de données souhaité pour cette communication,
> c) ladite requête de rattachement parvient à un centre de gestion (interne ou externe) chargé de gérer cette station serveuse,
> d) ledit centre de gestion décide, en fonction dudit affaiblissement de propagation et de la charge de la station serveuse, s'il autorise ou non le rattachement demandé, et
> e) en cas d'admission, le centre de gestion décide, en fonction de la charge de la station serveuse, s'il accorde en totalité ou seulement en partie les ressources requises pour obtenir le débit souhaité par le terminal.

Une fois rattaché au réseau, c'est-à-dire connecté à une station serveuse, le terminal est, classiquement, apte à mesurer une valeur de SINR (initiales des mots anglais « *Signal over Interference plus Noise Ratio* » signifiant « Rapport Signal sur Interférences plus Bruit ») relative au signal reçu de la part de cette station serveuse, et à transmettre cette valeur de SINR à la station serveuse. Celle-ci pourra par exemple, sur cette base, déterminer le meilleur schéma de modulation et de codage pour la communication. Comme expliqué en détail ci-dessous, plus le SINR est élevé, et meilleure sera la qualité de la communication.

Un terminal MIF qui a les moyens et le droit d'accéder à une pluralité de réseaux, a donc tout intérêt à demander son rattachement au réseau qui lui offrira, *après rattachement,* le meilleur SINR. Le problème qui se pose dans ces conditions est de savoir comment le terminal peut connaître les valeurs des SINR respectifs des réseaux respectifs auxquels il a accès avant tout rattachement, ou le SINR qu'il aurait sur un deuxième réseau alors qu'il est rattaché à un premier réseau.

Selon une première solution connue, l'opérateur d'un réseau utilise des simulateurs qui reposent sur des modèles théoriques pour décrire la réalité du terrain, par exemple des modèles de propagation d'ondes électromagnétiques ou des modèles du trafic d'échanges de données dans le réseau.

La principale limitation de ces simulations est liée à la précision de ces modèles.

Selon une deuxième solution connue, des mesures de conditions radio dans un réseau peuvent être avantageusement effectuées dans ce réseau par des terminaux appartenant à des usagers du réseau. Il est ainsi prévu que les terminaux mobiles, appartenant à un réseau radio mobile terrestre tel qu'un réseau GSM, ou un réseau UMTS, ou un réseau EDGE (initiales des mots anglais, « *Enhanced Data rates for GSM Evolution* »), ou encore de type WIMAX, effectuent dans le réseau considéré des mesures de manière périodique ou suite à des événements prédéfinis. Ainsi, la proposition intitulée « *MDT Measurement Model* » (réunion #68bis du groupe de normalisation RAN WG2 du « *3rd Generation Partnership Project* » (3GPP), Valence, Espagne, 18 au 22 janvier 2010) divulgue un système de mesures radio dans lequel une entité de gestion d'un réseau d'accès radio UTRAN (initiales de « *UMTS Terrestrial Radio Access Network* ») diffuse un message requérant la mise en œuvre, par des terminaux mobiles d'usagers, d'une mesure de nature spécifiée dans une zone géographique spécifiée (ce système est connu sous le nom de « *Minimization of Drive Tests* », ou MDT, en anglais). Les terminaux du réseau recevant la requête décident ou non d'effectuer la mesure requise, en particulier, en fonction du fait qu'ils sont situés ou non dans cette zone de mesure, ce qu'ils peuvent déterminer au moyen d'un dispositif de positionnement, tel qu'un dispositif GPS (« *Global Positioning System* »), dont ils sont équipés ; chaque terminal ayant effectué la mesure est apte à stocker les résultats de cette mesure, et à les transmettre audit réseau UTRAN à un instant prédéterminé. Le réseau peut ainsi connaître le SINR qui pourra caractériser une communication avec un premier terminal, sur la base du SINR caractérisant au même instant une communication avec un second terminal géographiquement très proche du premier terminal.

L'inconvénient de cette deuxième solution est qu'il n'existe pas toujours un tel second terminal.

Selon une troisième solution connue, l'opérateur d'un réseau accumule dans une base de données des résultats de mesure du SINR en divers endroits et à divers moments (jour de l'année, et heure du jour). Si la base de données est assez riche, l'opérateur pourra y trouver le SINR mesuré au même endroit que le terminal concerné, la veille à la même heure, ou le même jour à la même heure de l'année précédente, et ainsi de suite.

L'inconvénient de cette troisième solution est qu'elle suppose une reproduction périodique des conditions de réception à un endroit du réseau. Or une telle supposition est irréaliste, notamment en raison des fluctuations hebdomadaires et saisonnières, ainsi que de l'évolution rapide des architectures réseau pour répondre à une demande de débit en croissance rapide de la part des utilisateurs.

US2012/0071200 décrit un appareil pour sélectionner une station de base dans une pluralité de stations de bases (macro et/ou home eNB): l'appareil récupère une information, qui peut être un Rapport Signal Bruit, pour chaque station de base. Sur la base de cette information la station de base la plus appropriée pour un terminal mobile est sélectionnée.

## RESUMÉ DE L'INVENTION.

L'invention est définie dans la revendication indépendante 1. D'autres aspects sont présentés dans les revendications dépendantes.

La présente invention concerne donc, selon un premier aspect, divers dispositifs.

Elle concerne ainsi, premièrement, un centre de gestion d'un réseau sans-fil, chargé de gérer une station serveuse donnée et un ensemble de stations serveuses voisines de ladite station serveuse donnée. Ledit centre de gestion est remarquable en ce qu'il comprend des moyens pour :

- obtenir les charges desdites stations serveuses voisines, et
- calculer, sur la base desdites charges, le Rapport Signal sur Bruit qui caractériserait une communication entre ladite station serveuse donnée et un terminal mobile situé en un point donné de la zone géographique desservie par cette station serveuse.

On notera que, dans le cadre de la présente invention, on appelle « charge » d'une station serveuse la fraction de ses ressources radio allouée aux terminaux attachés à cette station, moyennée sur une période de temps suffisante pour pouvoir lisser les fluctuations de courte durée dues aux variations des besoins en ressources des usagers en cours de session, ainsi qu'aux débuts et fins de sessions de courte durée. Lesdites ressources sont naturellement fonction de la technologie radio sous-jacente ; il peut s'agir par exemple du nombre de canaux, ou de sous-bandes de fréquences, ou d'intervalles temporels, ou de codes, et ainsi de suite.

Grâce à ces dispositions, ladite station serveuse peut avantageusement connaître la valeur du Rapport Signal sur Bruit qui caractériserait une communication avec ledit terminal mobile, et ce, éventuellement, avant même l'initiation d'une telle communication.

Lesdites stations serveuses pourront être, par exemple, des stations de base d'un réseau cellulaire, ou des points d'accès d'un réseau WLAN. Par ailleurs, ledit centre de gestion pourra, par exemple, être le Centre d'Opérations et de Gestion (« *Operations and Management Center* » en anglais) défini par le 3GPP ; on notera que, dans les réseaux actuels, les Centres d'Opérations et de Gestion obtiennent habituellement des charges de stations serveuses moyennées sur une durée de 5 minutes minimum.

Selon un deuxième aspect, l'invention concerne un système pour évaluer la qualité de communication dans un réseau sans-fil. Ledit système est remarquable en ce qu'il comprend au moins au moins un centre de gestion tel qu'exposé succinctement ci-dessus, ainsi qu'au moins un terminal mobile tel qu'exposé succinctement ci-dessus.

Dans un mode de réalisation, le terminal mobile comprend des moyens pour prendre en compte la valeur du Rapport Signal sur Bruit qui caractériserait une communication avec une station serveuse d'un réseau auquel ledit terminal mobile a accès, ladite valeur ayant été envoyée au terminal mobile par un centre de gestion dudit réseau, directement ou via ladite station serveuse.

Grâce à ces dispositions, ledit terminal mobile peut avantageusement connaître la valeur du Rapport Signal sur Bruit qui caractériserait une communication avec ladite station serveuse avant même d'initier une telle communication, et connaître la valeur du Rapport Signal sur Bruit qui caractériserait une communication via une station serveuse d'un deuxième réseau lorsqu'il est déjà connecté à une station serveuse d'un premier réseau.

Selon des caractéristiques particulières, ledit terminal mobile comprend en outre des moyens pour :

- recevoir plusieurs valeurs de Rapport Signal sur Bruit respectives relatives à plusieurs réseaux respectifs auxquels ledit terminal a accès,
- comparer lesdites valeurs de Rapport Signal sur Bruit, et
- demander son rattachement à celui desdits réseaux qui est associé au Rapport Signal sur Bruit le plus élevé.

Dans un mode de réalisation, le système comprend en outre une entité de service comprenant des moyens pour :

- recevoir, de la part d'au moins un centre de gestion tel qu'exposé succinctement ci-dessus, les valeurs du Rapport Signal sur Bruit qui caractériserait une communication entre un terminal mobile donné et un ensemble de stations serveuses,
- sélectionner, sur la base au moins de ces informations de Rapport Signal sur Bruit, le réseau auquel le terminal devrait demander son rattachement parmi les réseaux auxquels ledit terminal mobile a accès, et
- indiquer au terminal mobile le réseau ainsi sélectionné.

Dans un mode de réalisation le système comprend en outre une entité de contrôle d'un réseau sans-fil comprenant des moyens pour :

- recevoir, de la part d'au moins un centre de gestion tel qu'exposé succinctement ci-dessus, les valeurs du Rapport Signal sur Bruit qui caractériserait une communication entre un terminal mobile et un ensemble de stations serveuses si ledit terminal mobile était placé en divers endroits du réseau, et
- prendre en compte au moins lesdites valeurs de Rapport Signal sur Bruit pour estimer l'état du réseau en termes de qualité de communication.

Dans un mode de réalisation, le système comprend en outre un fabricant d'outils OTT (Over the Top) comprenant des moyens pour :

- recevoir, de la part d'au moins un centre de gestion tel qu'exposé succinctement ci-dessus, les valeurs du Rapport Signal sur Bruit qui caractériserait une communication entre un terminal mobile et un ensemble de stations serveuses si ledit terminal mobile était placé en divers endroits du réseau, et
- prendre en compte au moins lesdites valeurs de Rapport Signal sur Bruit pour construire une carte de la couverture du réseau.

On notera qu'il est possible de réaliser ces dispositifs dans le contexte d'instructions logicielles et/ou dans le contexte de circuits électroniques.

Les avantages offerts par ce système sont essentiellement les mêmes que ceux offerts par les dispositifs succinctement exposés ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour contrôler le fonctionnement d'un centre de gestion, ou d'un terminal, ou d'une entité de service, ou d'une entité de contrôle, ou d'un fabricant d'outils OTT tels qu'exposés succinctement ci-dessus, lorsqu'il est exécuté sur un ordinateur.

Les avantages offerts par ces programmes d'ordinateur sont essentiellement les mêmes que ceux offerts par lesdits dispositifs.

D'autres aspects et avantages de l'invention apparaîtront à la lecture de la description détaillée ci-dessous de modes de réalisation particuliers.

MODES DE RÉALISATION DE L'INVENTION

Commençons par quelques rappels concernant la qualité de communication, et notamment de réception par un terminal, dans un réseau sans-fil.

Considérons, dans un réseau sans-fil, un ensemble de A stations serveuses émettant chacune avec une puissance respective $P_k^{(b)}$, où $k = 1, \ldots, A$ et $b = 1, \ldots, B$ dans $B$ sous-bandes de fréquences. On supposera pour simplifier l'exposé que ces A stations sont capables de délivrer la même puissance maximale $P_{\max}^{(b)}$ dans une sous-bande b donnée.

Soit $h_{k \to \vec{r}}$ l'affaiblissement de propagation du signal entre une station serveuse $k$ et un point $\vec{r}$ du réseau. On désigne par $D_k$ la zone géographique desservie par la station serveuse k. Autrement dit :

$$D_k = \{\vec{r} \mid h_{k \to \vec{r}} > h_{k' \to \vec{r}} \ \forall k' \in 1, \ldots A \ \text{et} \ k' \neq k\} \ . \tag{1}$$

Par définition, une station serveuse k considère qu'une autre station serveuse $k'$ est sa « voisine » s'il existe au moins un point $\vec{r}$ de $D_k$ tel que l'affaiblissement de propagation $h_{k' \to \vec{r}}$ soit supérieur à un seuil prédéterminé.

Le Rapport Signal sur Interférences plus Bruit (en anglais, « *Signal over Interference plus Noise Ratio* », ou SINR) $R_{\vec{r}}^{(b)}$ dans la sous-bande de fréquences numéro *b* en un point $\vec{r}$ desservi par une station serveuse *k* vaut :

$$R^{(b)}(\vec{r}) = \frac{h_{k \to \vec{r}} P_{\max}^{(b)}}{\theta^2 + \sum_{k' \neq k} h_{k' \to \vec{r}} P_{k'}^{(b)}} \ , \tag{2}$$

où $\theta^2$ est le bruit thermique. On notera que les interférences ne sont dues qu'aux stations serveuses du même réseau, car on suppose que des réseaux distincts opèrent dans des bandes de fréquences distinctes.

Le débit maximum $\gamma_{\vec{r}}^{(b)}$ (mesuré par exemple en bit/s) que la station serveuse *k* est capable de délivrer au point $\vec{r}$ dans la sous-bande de fréquences numéro b (i.e. le débit atteignable si la station serveuse n'envoie des données que vers ce point $\vec{r}$) est classiquement donné par :

$$\gamma_{\vec{r}}^{(b)} = \varphi\left(R^{(b)}(\vec{r})\right) , \tag{3}$$

où $\varphi$ est une fonction connue de l'Homme du Métier. Cette fonction $\varphi$ modélise l'impact des fluctuations de l'affaiblissement de propagation sur le débit (phénomène connu sous le nom de « *fading* » en anglais) pour le système radio concerné, et notamment pour la technologie radio spécifique (OFDMA, CDMA, ou autre) concernée.

On peut en déduire le nombre de sous-bandes de fréquences (ou, plus généralement de ressources compatibles avec la technologie de communication considérée) requises pour satisfaire le débit $\gamma_{\vec{r}}$ demandé par un terminal situé au point $\vec{r}$ en vue d'une certaine communication avec une certaine QoS.

On va maintenant présenter un mode de réalisation de l'invention, dans lequel on définit la « charge » $c_{k'}^{(b)}$ d'une station serveuse k' en fonction de la puissance $P_{k'}^{(b)}$ émise dans une sous-bande b. Ainsi :

$$c_{k'}^{(b)} = \frac{P_{k'}^{(b)}}{P_{\max}^{(b)}} \ . \tag{4}$$

Dans ces conditions, on peut réécrire l'équation (2) sous la forme :

$$R^{(b)}(\vec{r}) = \frac{1}{\tau_{\vec{r}}^{(b)} + \sum_{k' \neq k} c_{k'}^{(b)} I_{k' \to \vec{r}}} \ , \tag{5}$$

où

$$I_{k' \to \vec{r}} = \frac{h_{k' \to \vec{r}}}{h_{k \to \vec{r}}} \tag{6}$$

est le « facteur d'interférences » causé au point $\vec{r}$ de $D_k$ par une station serveuse $k'$, et

$$\tau_{\vec{r}}^{(b)} = \frac{\theta^2}{h_{k \to \vec{r}} P_{\max}^{(b)}}$$ (7)

est un « bruit relatif ».

En pratique, on peut considérer que les seules interférences significatives proviennent d'un certain nombre M de stations serveuses « voisines » (telles que définies ci-dessus) de la station serveuse k. L'équation (5) devient dans cette approximation :

$$R^{(b)}(\vec{r}) = \frac{1}{\tau_{\vec{r}}^{(b)} + \sum_{k'=1}^{M} c_{k'}^{(b)} I_{k' \to \vec{r}}} \,,$$ (8)

où la somme ne porte que sur les M stations serveuses voisines de la station serveuse k.

Lors d'une étape préalable à la mise en œuvre de l'invention, un centre de gestion du réseau calcule les *M* facteurs d'interférences, par exemple à partir des affaiblissements de propagation mesurés par un terminal situé au point $\vec{r}$. De plus, le centre de gestion du réseau peut ensuite calculer le bruit relatif $\tau_{\vec{r}}^{(b)}$ à partir du SINR mesuré par un terminal situé au point $\vec{r}$ en communication avec la station serveuse *k,* et des valeurs de charge mesurées par les M stations serveuses voisines de la station serveuse k ; on notera toutefois que la contribution de ce bruit relatif au dénominateur de l'équation (8) est généralement négligeable.

L'équation (8) pourra alors être utilisée à tout instant par le centre de gestion pour calculer le SINR au point $\vec{r}$ en fonction de la valeur prise, à cet instant, par les M charges $c_{k'}^{(b)}$.

En particulier, dans le cas où le réseau est apte à équilibrer les charges entre stations serveuses voisines (« *load balancing* » en anglais), lesdites charges sont, à un instant donné, toutes égales à une certaine valeur commune $c^{(b)}$. Si l'on suppose que le bruit relatif $\tau_{\vec{r}}^{(b)}$ est négligeable, l'équation (8) devient alors :

$$R^{(b)}(\vec{r}) = \frac{1}{c^{(b)} I_{\vec{r}}^{tot}} \,,$$ (9)

où, par définition :

$$I_{\vec{r}}^{\text{tot}} = \sum_{k'=1}^{M} I_{k' \to \vec{r}} \,.$$ (10)

est le facteur d'interférences total au point $\vec{r}$. Par conséquent, le centre de gestion peut, dans ce cas, commodément calculer le SINR $R^{(b)}(\vec{r}, t_2)$ à un instant $t_2$ sur la base de la charge commune $c^{(b)}(t_2)$ à cet instant $t_2$, et du SINR $R^{(b)}(\vec{r}, t_1)$ et de la charge commune $c^{(b)}(t_1)$ à un instant antérieur $t_1$

$$R^{(b)}(\vec{r}, t_2) = \frac{R^{(b)}(\vec{r}, t_1) c^{(b)}(t_1)}{c^{(b)}(t_2)} \,.$$ (11)

Les centres de gestion pourront exploiter l'équation (8), et en particulier l'équation dérivée (11) lorsque les conditions s'y prêtent, de différentes façons.

Selon un premier exemple, un centre de gestion d'un premier réseau auquel un terminal MIF a accès transmet à ce terminal (directement, ou via la station servant ledit terminal MIF dans ce premier réseau) la valeur du SINR relative au point $\vec{r}$ où le terminal est situé, en vue d'une éventuelle communication avec ce premier réseau. De même, un centre de gestion d'un second réseau auquel ledit terminal MIF a accès transmet à ce terminal (directement, ou via la station servant ledit terminal MIF dans ce deuxième réseau) la valeur du SINR relative au point $\vec{r}$ où le terminal est situé, en vue d'une éventuelle communication avec ce second réseau. Le cas échéant, ce mécanisme est mis en œuvre pour encore d'autres réseaux auxquels le terminal a accès. Ainsi, lorsque l'utilisateur du terminal souhaite entrer en communication avec un correspondant, il pourra avantageusement demander son rattachement au réseau offrant le meilleur SINR. Toutefois, ce mode opératoire n'est possible que si le terminal MIF est apte à recevoir les valeurs de SINR, et à les comparer.

C'est pourquoi, selon un deuxième exemple, les centres de gestion respectifs envoient les valeurs de SINR respectives à une entité de service, telle que la Fonction de Découverte et de Sélection de Réseau d'Accès (« *Access Network Discovery and Selection Function* », ou ANDSF, en anglais) décrite dans la norme TS 24.312 du 3GPP. Ladite entité de service sélectionne alors, sur la base au moins de ces informations de SINR, le réseau auquel le terminal devrait demander son rattachement parmi les réseaux auxquels le terminal a accès, et indique au terminal le réseau ainsi sélectionné.

Selon un troisième exemple, les informations de SINR en divers points d'un réseau sont transmises, par un ou plusieurs centre(s) de gestion, à une entité de contrôle du réseau, afin de permettre à cette entité de contrôle de connaître l'état du réseau en termes de qualité de communication. Grâce à ces dispositions, un opérateur réseau peut rapidement identifier le besoin de ressources supplémentaires en des endroits du réseau où la qualité se dégrade, et si possible améliorer l'allocation des ressources dans le réseau, par exemple en activant des stations serveuses en veille.

Selon un quatrième exemple, les informations de SINR en divers points d'un réseau sont transmises, par un ou plusieurs centre(s) de gestion, à un fabricant d'outils appelés « *over the top* » en anglais, tel qu'un fournisseur de cartes de la couverture du réseau aux abonnés à ce réseau. Le problème de la technique classique utilisée pour la construction de cartes de SINR est que les valeurs de SINR dépendent beaucoup des conditions de charge du réseau, et changent donc beaucoup avec le temps ; cela nuit à la cohérence des données d'une carte de SINR car ces données résultent de valeurs collectées en différents endroits à différents moments.

Une application possible de la présente invention à la cartographie d'un réseau consiste à construire une carte dynamique des valeurs de SINR à partir d'une carte de référence construite préalablement. Plus précisément :

- la carte préalable du Rapport Signal sur Bruit en une pluralité de points du réseau est construite de telle sorte que, pour chacun desdits points, on mesure le Rapport Signal sur Bruit en ce point ainsi que les charges $c_{kl}^{(b)}$ des stations serveuses du réseau voisines de la station serveuse desservant ledit point du réseau ; puis
- la carte du Rapport Signal sur Bruit auxdits points du réseau à un instant donné est construite de telle sorte qu'en chacun desdits points on calcule le Rapport Signal sur Bruit en ce point en fonction des charges $c_{kl}^{(b)}$ desdites stations serveuses voisines mesurées audit instant donné, et en référence à la carte préalable.

On notera qu'il est commode de construire cette carte préalable lorsque les stations serveuses voisines sont « à vide » ou à faible charge. Autrement dit, en pratique, on collecte tout d'abord les valeurs de SINR à un moment où le réseau est très peu utilisé ; ensuite, on construit une carte dynamique de SINR par exploitation de l'information des charges des stations serveuses du réseau, information qu'un centre de gestion du réseau peut obtenir rapidement à tout instant.

La mise en œuvre de l'invention au sein des nœuds d'un réseau sans-fil, notamment les centres de gestion et les terminaux, ou les entités de service, ou les entités de contrôle, ou les fabricants d'outils OTT, peut être réalisée au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant, par des signaux, une mémoire, ainsi qu'une unité d'entrée et une unité de sortie.

De plus, ce système informatique peut être utilisé pour exécuter un programme d'ordinateur selon l'invention. En effet, l'invention vise aussi un programme d'ordinateur téléchargeable depuis un réseau de communication comprenant des instructions pour contrôler le fonctionnement d'un centre de gestion, ou d'un terminal, ou d'une entité de service, ou d'une entité de contrôle, ou d'un fabricant d'outils OTT selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus. Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel ledit programme d'ordinateur est incorporé.

**Revendications**

1. Centre de gestion d'un réseau sans-fil, chargé de gérer une station serveuse donnée et un ensemble de stations serveuses voisines de ladite station serveuse donnée, **caractérisé en ce qu'**il comprend des moyens pour :

   - obtenir les charges desdites stations serveuses voisines, la charge d'une dite station serveuse voisine désignant la fraction des ressources radio de ladite station serveuse voisine allouée aux terminaux attachés à cette station serveuse voisine, et
   - calculer, sur la base desdites charges, le Rapport Signal sur Bruit qui caractériserait une communication entre ladite station serveuse donnée et un terminal mobile situé en un point donné de la zone géographique desservie par cette station serveuse.

2. Centre de gestion selon la revendication 1, **caractérisé en ce qu'**il comprend en outre des moyens pour envoyer audit terminal mobile ladite valeur calculée du Rapport Signal sur Bruit.

3. Centre de gestion selon la revendication 1, **caractérisé en ce qu'**il comprend en outre des moyens pour envoyer ladite valeur calculée du Rapport Signal sur Bruit à une entité de service apte, sur la base au moins de ladite valeur calculée du Rapport Signal sur Bruit, à conseiller audit terminal mobile à quel réseau il devrait demander son rattachement parmi les réseaux auxquels le terminal mobile a accès.

4. Centre de gestion selon la revendication 1, **caractérisé en ce qu'**il comprend en outre des moyens pour envoyer ladite valeur calculée du Rapport Signal sur Bruit à une entité de contrôle du réseau apte à collecter des données de qualité de communication dans le réseau.

5. Système pour évaluer la qualité de communication dans un réseau sans-fil, **caractérisé en ce qu'**il comprend un terminal mobile, des stations serveuses et un centre de gestion du réseau selon l'une quelconque des revendications 1 à 4.

6. Système selon la revendication 5 dans lequel le terminal mobile comprend des moyens pour prendre en compte la valeur du Rapport Signal sur Bruit évaluée par le centre de gestion, ladite valeur ayant été envoyée au terminal mobile directement ou via ladite station serveuse donnée.

7. Système selon la revendication 5, dans lequel le terminal mobile comprend en outre des moyens pour :

   - recevoir de plusieurs centres de gestion selon l'une quelconque des revendications 1 à 4 plusieurs valeurs de Rapport Signal sur Bruit respectives relatives à plusieurs réseaux respectifs auxquels ledit terminal a accès,
   - comparer lesdites valeurs de Rapport Signal sur Bruit, et
   - demander son rattachement à celui desdits réseaux qui est associé au Rapport Signal sur Bruit le plus élevé.

8. Système selon la revendication 5 comprenant en outre une entité de service comprenant des moyens pour :

   - recevoir une valeur de Rapport Signal sur Bruit de la part dudit au moins un centre de gestion d'un réseau sans-fil ;
   - sélectionner, sur la base au moins de ladite valeur de Rapport Signal sur Bruit, le réseau auquel le terminal devrait demander son rattachement parmi les réseaux auxquels ledit terminal mobile a accès, et
   - indiquer au terminal mobile le réseau ainsi sélectionné.

9. Système selon la revendication 5 comprenant en outre une entité de contrôle d'un réseau sans-fil, comprenant des moyens pour :

- recevoir une valeur de Rapport Signal sur Bruit de la part d'au moins un centre de gestion dudit réseau sans-fil conforme à l'une quelconque des revendications 1 à 4 ; et prendre en compte au moins ladite valeur de Rapport Signal sur Bruit pour estimer l'état dudit réseau sans fil en termes de qualité de communication.

**10.** Moyen de stockage de données inamovible, ou partiellement ou totalement amovible, comportant des instructions de code de programme informatique lesquelles, lorsque le programme informatique est exécuté par un microprocesseur, produisent le contrôle par le microprocesseur du fonctionnement d'un centre de gestion selon l'une quelconque des revendications 1 à 4.

**11.** Programme d'ordinateur téléchargeable depuis un réseau de communication et/ou stocké sur un support lisible par ordinateur et comprenant instructions lesquelles, lorsque le programme est exécuté par un microprocesseur, produisent le contrôle par le microprocesseur du fonctionnement d'un centre de gestion selon l'une quelconque des revendications 1 à 4.

**Patentansprüche**

**1.** Verwaltungszentrum eines drahtlosen Netzwerks, das dafür zuständig ist, eine gegebene bedienende Station und eine Einheit bedienender Stationen zu verwalten, die der bedienenden Station benachbart sind, **dadurch gekennzeichnet, dass** es Einrichtungen enthält, um:

- die Lasten der benachbarten bedienenden Stationen zu erhalten, wobei die Last einer benachbarten bedienenden Station den Anteil der Funkressourcen der benachbarten bedienenden Station bezeichnet, der den an diese benachbarte bedienende Station angeschlossenen Endgeräten zugewiesen ist, und
- auf der Basis der Lasten das Signal-Rausch-Verhältnis zu berechnen, das eine Kommunikation zwischen der gegebenen bedienenden Station und einem mobilen Endgerät charakterisieren würde, das sich an einem gegebenen Punkt des von dieser bedienenden Station erschlossenen geographischen Gebiets befindet.

**2.** Verwaltungszentrum nach Anspruch 1, **dadurch gekennzeichnet, dass** es außerdem Einrichtungen enthält, um den berechneten Wert des Signal-Rausch-Verhältnisses an das mobile Endgerät zu senden.

**3.** Verwaltungszentrum nach Anspruch 1, **dadurch gekennzeichnet, dass** es außerdem Einrichtungen enthält, um den berechneten Wert des Signal-Rausch-Verhältnisses an eine Dienstentität zu senden, die auf der Basis mindestens des berechneten Werts des Signal-Rausch-Verhältnisses dem mobilen Endgerät raten kann, von welchem Netzwerk unter den Netzwerken, auf die das mobile Endgerät Zugriff hat, es seinen Anschluss anfordern sollte.

**4.** Verwaltungszentrum nach Anspruch 1, **dadurch gekennzeichnet, dass** es außerdem Einrichtungen enthält, um den berechneten Wert des Signal-Rausch-Verhältnisses an eine Steuerentität des Netzwerks zu senden, die Kommunikationsgütedaten im Netzwerk sammeln kann.

**5.** System zur Bewertung der Kommunikationsgüte in einem drahtlosen Netzwerk, **dadurch gekennzeichnet, dass** es ein mobiles Endgerät, bedienende Stationen und ein Verwaltungszentrum des Netzwerks nach einem der Ansprüche 1 bis 4 enthält.

**6.** System nach Anspruch 5, wobei das mobile Endgerät Einrichtungen enthält, um den Wert des vom Verwaltungszentrum bewerteten Signal-Rausch-Verhältnisses zu berücksichtigen, wobei der Wert direkt oder über die gegebene bedienende Station an das mobile Endgerät gesendet wurde.

**7.** System nach Anspruch 5, wobei das mobile Endgerät außerdem Einrichtungen enthält, um:

- von mehreren Verwaltungszentren nach einem der Ansprüche 1 bis 4 mehrere Signal-Rausch-Verhältnis-Werte bezüglich mehrerer Netzwerke zu empfangen, auf die das Endgerät Zugriff hat,
- die Signal-Rausch-Verhältnis-Werte zu vergleichen, und
- seinen Anschluss an dasjenige der Netzwerke anzufordern, das dem höchsten Signal-Rausch-Verhältnis zugeordnet ist.

**8.** System nach Anspruch 5, das außerdem eine Dienstentität enthält, die Einrichtungen enthält, um:

- einen Signal-Rausch-Verhältnis-Wert von dem mindestens einen Verwaltungszentrum eines drahtlosen Netzwerks zu empfangen;
- auf der Basis mindestens des Signal-Rausch-Verhältnis-Werts das Netzwerk unter den Netzwerken, auf die das mobile Endgerät Zugriff hat, auszuwählen, von dem das Endgerät seinen Anschluss anfordern sollte, und
- dem mobilen Endgerät das so ausgewählte Netzwerk anzuzeigen.

9. System nach Anspruch 5, das außerdem eine Steuerentität eines drahtlosen Netzwerks enthält, die Einrichtungen enthält, um:

- einen Signal-Rausch-Verhältnis-Wert von mindestens einem Verwaltungszentrum des drahtlosen Netzwerks gemäß einem der Ansprüche 1 bis 4 zu empfangen; und den mindestens einen Signal-Rausch-Verhältnis-Wert zu berücksichtigen, um den Zustand des drahtlosen Netzwerks in Bezug auf die Kommunikationsgüte zu schätzen.

10. Fest installierte oder teilweise oder vollständig abnehmbare Datenspeichereinrichtung, die EDV-Programmcodeanweisungen aufweist, die, wenn das EDV-Programm von einem Mikroprozessor ausgeführt wird, die Steuerung des Betriebs eines Verwaltungszentrums nach einem der Ansprüche 1 bis 4 durch den Mikroprozessor erzeugen.

11. Computerprogramm, das von einem Kommunikationsnetzwerk herunterladbar und/oder auf einem computerlesbaren Träger gespeichert ist und Anweisungen enthält, die, wenn das Programm von einem Mikroprozessor ausgeführt wird, die Steuerung des Betriebs eines Verwaltungszentrums nach einem der Ansprüche 1 bis 4 durch den Mikroprozessor erzeugen.

**Claims**

1. Management centre for managing a wireless network, responsible for managing a given serving station and a set of serving stations neighbouring said given serving station, **characterized in that** it comprises means for:

- obtaining the loads of said neighbouring serving stations, the load of a said neighbouring serving station referring to the fraction of the radio resources of said neighbouring serving station allocated to the terminals attached to this neighbouring serving station, and
- calculating, on the basis of said loads, the signal-to-noise ratio which would characterize a communication between said given serving station and a mobile terminal located at a given point in the geographical area served by this serving station.

2. Management centre according to Claim 1, **characterized in that** it further comprises means for sending said calculated value of the signal-to-noise ratio to said mobile terminal.

3. Management centre according to Claim 1, **characterized in that** it further comprises means for sending said calculated value of the signal-to-noise ratio to a service entity that is able, on the basis at least of said calculated value of the signal-to-noise ratio, to advise said mobile terminal as to which network it should request to be attached from among the networks to which the mobile terminal has access.

4. Management centre according to Claim 1, **characterized in that** it further comprises means for sending said calculated value of the signal-to-noise ratio to a network control entity that is able to collect data on the quality of communication in the network.

5. System for evaluating the quality of communication in a wireless network, **characterized in that** it comprises a mobile terminal, serving stations and a management centre for managing the network according to any one of Claims 1 to 4.

6. System according to Claim 5, wherein the mobile terminal comprises means for taking account of the value of the signal-to-noise ratio evaluated by the management centre, said value having been sent to the mobile terminal directly or via said given serving station.

7. System according to Claim 5, wherein the mobile terminal further comprises means for:

- receiving, from a plurality of management centres according to any one of Claims 1 to 4, a plurality of respective signal-to-noise ratio values relating to a plurality of respective networks to which said terminal has access,
- comparing said signal-to-noise ratio values, and
- requesting its attachment to the one of said networks which is associated with the highest signal-to-noise ratio.

8. System according to Claim 5, further comprising a service entity comprising means for:

- receiving a signal-to-noise ratio value from said at least one management centre for managing a wireless network;
- selecting, on the basis at least of said signal-to-noise ratio value, the network to which the terminal should request to be attached from among the networks to which said mobile terminal has access, and
- indicating the network thus selected to the mobile terminal.

9. System according to Claim 5, further comprising a control entity for controlling a wireless network, comprising means for:

- receiving a signal-to-noise ratio value from at least one management centre for managing said wireless network in accordance with any one of Claims 1 to 4; and
- taking account of at least said signal-to-noise ratio value to estimate the state of said wireless network in terms of quality of communication.

10. Non-removable, or partially or fully removable, data storage means comprising computer program code instructions which, when the computer program is executed by a microprocessor, result in the microprocessor controlling the operation of a management centre according to any one of Claims 1 to 4.

11. Computer program downloadable from a communication network and/or stored in a computer-readable medium and comprising instructions which, when the program is executed by a microprocessor, result in the microprocessor controlling the operation of a management centre according to any one of Claims 1 to 4.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120071200 A